(19) Europäisches Patentamt / European Patent Office / Office européen des brevets

(11) **EP 4 388 935 B1**

(12) **EUROPEAN PATENT SPECIFICATION**

(45) Date of publication and mention
of the grant of the patent:
**09.07.2025 Bulletin 2025/28**

(21) Application number: **23020509.8**

(22) Date of filing: **16.11.2023**

(51) International Patent Classification (IPC):
*A46B 17/06* (2006.01)     *A46B 15/00* (2006.01)

(52) Cooperative Patent Classification (CPC):
**A46B 17/06; A46B 15/0095; A46B 17/04;
A46B 17/065;** A46B 17/00; A46B 17/02;
A46B 2200/1066

(54) **PRODUCT WITH THE FUNCTION OF A TOOTHBRUSH DRYER AND TOOTHBRUSH HOLDER**

PRODUKT MIT DER FUNKTION EINES ZAHNBÜRSTENTROCKNERS UND
ZAHNBÜRSTENHALTERS

PRODUIT AYANT LA FONCTION D'UN SÉCHOIR À BROSSES À DENTS ET D'UN
PORTE-BROSSES À DENTS

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **22.11.2022 CZ 20220489**

(43) Date of publication of application:
**26.06.2024 Bulletin 2024/26**

(73) Proprietor: **ALFA VITA, s.r.o.
15900 Praha 5 (CZ)**

(72) Inventor: **Richter, Lubos
143 00 Praha 4 (CZ)**

(74) Representative: **Originvent
Vinohradská 17
12000 Praha 2 (CZ)**

(56) References cited:
**US-A- 5 875 516        US-A1- 2012 298 135
US-A1- 2015 157 431**

**Description**

TECHNICAL FIELD

The invention relates to a product with a combined function of a dryer and a toothbrush holder.

BACKGROUND ART

At present, various aids are used to dry the brushes. Drying the toothbrush has a hygienic justification, as bacteria and mould can accumulate on a wet or damp toothbrush. Usually, the toothbrush is left in a container. Drying is done by, for example, running a finger over the filaments and then placing the brush in a container. However, there are also sophisticated devices in which the toothbrush is placed and the UV rays are used to eliminate the germs from the toothbrush filaments. However, these devices are relatively expensive and inaccessible to the average user, they are not designed to be carried and therefore, especially in the case of travel, their use is inappropriate and too complicated.

No product has yet been designed that is very inexpensive, effectively mechanically dries the brush filaments, and can be used to allow the brush to dry itself so that air can flow freely around the brush filaments.

A known solution according to document US3968950A is disclosed, which is a combined toothbrush support and protective cover designed to be coupled to a handle or to be coupled to a handle of different cross-sections and having surfaces that support the toothbrush in a suspended position in a toothbrush stand with the head spaced from the stand and in a position on a flat surface with the head spaced from the flat support surface. However, this arrangement is not adapted and intended to mechanically dry the toothbrush, since only the body of the toothbrush is inserted into the opening. The solution does not propose any elements for mechanically drying the brush.

Also known is a solution according to US5875516A, which provides a splash guard and a support accessory for a toothbrush, which is available in six shapes and is made of a single piece of injection-moulded flexible plastic with a through-hole in the centre. A support collar is moulded into both surfaces of the guard and surrounds the opening, ensuring high stability of the guard position when fitted to the toothbrush handle. The guard is easily fitted to the toothbrush by wetting the handle with water, aligning the opening, pressing the guard against the lower end of the toothbrush handle, and sliding it forward to the neck area approximately 11.5 inches below the filaments. A properly positioned guard prevents toothpaste from dripping onto the handle; prevents the toothbrush from being swallowed or regurgitating; and suspends the toothbrush in the air so the filaments do not touch the table top or toothbrush stand. This solution therefore has a completely different purpose, which is primarily to protect against water running off during brushing. The opening is designed to hold the handle of the toothbrush firmly in place, i.e. it is not designed as a through hole for the brush head and, in particular, it does not serve to dry it out mechanically.

Further known is a solution according to US6758446, which is a portable device for hygienically holding a toothbrush, which is generally planar in shape and made of a rigid polymer, such as an acrylic resin, and has a predefined shape with at least one linear edge for resting on a planar surface, such as a counter or sink. The toothbrush holder includes one or more openings for passage of the toothbrush handle. The distal end of the toothbrush handle rests against a surface such as a counter or sink, while the end of the toothbrush filaments is elevated above the counter surface due to the supporting effect of the toothbrush holder being positioned near the end of the toothbrush filaments. Again, this device does not comprise an opening adapted and designed as a through hole for the brush head and, in particular, does not serve to mechanically dry it.

Further, a solution according to KR200437777Y1 is known which aims to provide a children's toothbrush that can be used hygienically and safely for children aged 3 to 4 years. Although this solution comprises a part with an opening which prevents the toothbrush from being inserted too deeply into the child's oral cavity and into which the body of the toothbrush is inserted, this solution has a completely different purpose from the invention proposed here.

SUMMARY OF THE INVENTION

The subject of the invention is a means or device in the form of a combined brush dryer and brush stand, the primary function of which is the effective removal of moisture from the brush filaments, first primarily by mechanical action consisting of achieving an optimum frictional force on the brush filaments and achieving a maximum centrifugal effect, by which the filaments are freed from moisture, and in a second step, by using the same means, the toothbrush is dried by a free stream of air, since the subject dryer also acts as a stand after the body of the toothbrush has been supported by the edge of the opening of the device. The advantage of the device according to the present invention is the minimal manufacturing cost and therefore purchasing cost, where it can advantageously be delivered directly with the toothbrush, and the minimal storage requirements consisting in the degradability of the device.

The basis of the invention is that the present device comprises an opening for inserting a toothbrush that is adapted for the passage of a toothbrush head with filaments and which therefore has specially designed proportions of size in relation to the length, quantity and elasticity of the toothbrush filaments and the overall thickness of the toothbrush head with filaments, including a specially adapted shape of the opening.

In an advantageous embodiment, the material of the device according to the present invention is identical to the material for the manufacture of the toothbrush body, which reduces the cost of manufacture.

**a) Computational model for the determination of residual water with respect to toothbrush efficiency**

The computational model for determining residual water is dependent on the efficiency of the device, which is dependent on the dimensional parameters of the pass-through opening and the brush used. The calculation of the residual water is given by

$$z_{H2O} = p_{H2O} \cdot (1 - \eta)^N,$$

where N is the number of passes of the toothbrush through the device (back and forth motion). Laboratory measurements were made on three types of toothbrushes which differed in the density parameter of the filaments used in the toothbrush head. The effect of the areal density of the filaments on the amount of water loss was negligible, with individual results varying within $\pm 2$ %.

**b) Graph of water loss in relation to the number of toothbrush passes through the opening**

Using the three types of toothbrushes, 10 measurements were made each time, from which the mean value of the effectiveness of the product used was determined. When the head of the toothbrush was passed through the opening, the efficiency was equal to 40.9 % for the first type of test toothbrush, 42.5 % for the second type of toothbrush and 43.3 % for the third type.

Based on these measurements, a product efficiency of 42 % was determined. The calculation of the amount of residual water after using the product with N repetitions of steps (moving the toothbrush back and forth) is hereby defined as

$$z_{H2O} = p_{H2O} \cdot (1 - 0.42)^N$$

From the formula for the residual amount of water, a relationship can be derived for the relative amount of residual water $w$, which gives the percentage ratio of the remaining water in the toothbrush after the N-th passage $z_{H2O}$ to the initial state $p_{H2O}$. The following table shows the percentage of residual water when using the product with N number of passes:

| Number of passes N | Relative amount of residual water [%] |
|:---:|:---:|
| 0 | 100 % |
| 1 | 58 % |
| 2 | 33 % |
| 3 | 19 % |
| 4 | 11 % |
| 5 | 6 % |

The reduction in the amount of residual water in the brush head is shown in the graph, where the horizontal axis shows the number of passes $N$ and the vertical axis shows the percentage of the relative amount of residual water w.

**c) Dimensions of the operating portion of the product**

In order to maintain usability and the possibility of inserting the toothbrush into the opening of the product at different entry angles, the minimum width $S1_{min}$ of the opening is defined as the width $T1$ of the toothbrush head increased by 10 %. The maximum usable opening width $S1_{max}$ is defined as the width $T1$ of the toothbrush head increased by 80 %.

$$S1_{min} = 110 \% \, T1$$

$$S1_{max} = 180 \% \, T1$$

$$S1 = \langle 110 \% \, T1; 180 \% \, T1 \rangle$$

The minimum usable height $S2_{min}$ of the pass-through opening is defined as the sum of half the visible height T5 of the filaments and the height T4 of the fixed part. The fixed part of the toothbrush head is primarily the base for the filament placement. If a smaller pass-through opening height is used, mechanical degradation of the filaments occurs and results in irreversible damage to the toothbrush. The maximum usable height $S2_{max}$ of the pass-through opening is less than the sum of the height $T4$ of the fixed part of the head and the visible height $T5$ of the filaments.

$$S2_{min} = \frac{1}{2} \cdot T5 + T4$$

$$S2_{max} < T5 + T4$$

$$S2 = \left\langle \frac{1}{2} \cdot T5 + T4; T5 + T4 \right\rangle$$

The thickness of the product must be such that the product meets the mechanical resistance and at the same time does not prevent water from leaving the toothbrush filaments. It is therefore defined as having a minimum of 20 % of the height of the solid part of the toothbrush head and a maximum of 80 % of the height of the solid part of the toothbrush head.

$$S3_{min} = 20 \% \, T4$$

$$S3_{max} = 80 \% \, T4$$

$$S3 = \langle 20 \% \, T4; 80 \% \, T4 \rangle$$

Given the shape of the toothbrush and the direction of application, it is apparent to the skilled person that the opening must be of an appropriate shape to allow the toothbrush to pass through the opening. In the case of a rectangular shaped toothbrush head, the opening of the product preferably has a rectangular shape. The opening is defined as the projection of the surface of the opening into the direction of the toothbrush passage.

Let $\lambda$ be the relative height of the uncovered (visible) filaments of the head in percentage, defined as the ratio of the visible height $T5,v$ of the uncovered filaments (measured from the fixed part of the head) to the visible height $T5$ of the filaments.

$$\lambda = \frac{T5,v}{T5},$$

The optimum height $S2,optimal$ of the opening was experimentally defined as the sum of 61 % of the visible height $T5$ of the filaments and the height T4 of the fixed part of the head. At this height, the pass-through opening provides efficiency n = 42 % when the toothbrush is drawn parallel to the normal axis of the opening of the device.

$$S2, optimal = 61 \% \, T5 + T4$$

When the relative height $\lambda$ of the non-overlapping (visible) filaments changes, the $\eta0$ efficiency of the product changes. The calculation of this efficiency as a function of the relative height $\lambda$ of the non-overlapping (visible) filaments is defined by the formula

$$\eta0 = -\frac{\eta}{39 \cdot T5} \cdot (\lambda \cdot T5 + T4) + \frac{\eta \cdot (100 \cdot T5 + T4)}{39 \cdot T5}$$

valid for the definition domain $\lambda = (50; 100)$. In the case where the opening of the product covers more than half of the visible filament height, material damage to the toothbrush occurs.

Furthermore, the efficiency value $\eta$ of the product is also dependent on the type of toothbrush to which the product is applied. By keeping the same type of filament of the brush, the efficiency of the product increases when using a head with a higher density of filaments, while the resulting efficiency decreases when using a head with a lower density of filaments. When using a higher number of filaments in the head, the application of the product causes the filaments to come into closer contact with each other, contributing to a greater degree of drying of the individual filaments. For the same density, then, the efficiency increases with higher filament flexibility. Water loss occurs by two mechanisms, namely centrifugal force on the return of the filaments to their original configuration causing a droplet ejection effect into the environment and direct pressure on the filaments causing a wringing effect.

It is valid that at the third pull through, the residual weight of water is less than 20 % of the weight of the original amount of water before the use of product. Therefore, it can be said that for sufficient drying of the toothbrush, it is sufficient to perform three pull throughs (back and forth), then place the toothbrush in the stand and let the filaments dry by the air flow and the process of spontaneous drying of the toothbrush.

**Parameters:**

| | |
|---|---|
| S1 [mm] | width of the opening |
| S2 [mm] | height of the opening |
| S3 [mm] | product thickness |
| T1 [mm] | width of the toothbrush head (fixed part) |
| T2 [mm] | length of the toothbrush head (fixed part) |
| T3 [mm] | total height of the toothbrush head (fixed part + visible length of the filaments) |
| T4 [mm] | height of the fixed part of the toothbrush head |
| T5 [mm] | visible height of filaments |
| T5,v [mm] | visible height of the uncovered filaments (after application of the product, measured from the fixed part of the head) |
| D [pcs] | number of filaments depending on the density and surface area of each type of toothbrush |
| w [%] | the relative amount of residual water in the brush |
| N [pcs] | number of passes through the opening (defined as a back and forth movement through the opening) |
| $\eta$ [%] | the efficiency of the product having pass-through opening |
| $z_{H2O}$ [mg] | residual amount of water (after the Nth step of product use) |
| $p_{H2O}$ [mg] | initial amount of water (total weight of water soaked by the brush) |
| $\lambda$ | the relative height of the visible filaments not overlapped by the product |
| ZK | toothbrush |

## BRIEF DESCRIPTION OF THE DRAWINGS

Fig. 1 shows a toothbrush before insertion into the opening of the product;
Fig. 2 shows a toothbrush being partially pulled through the opening of the product, which acts as a dryer when the toothbrush is moved through the opening;
Fig. 3 shows a toothbrush passed through the opening of the product and resting on the edge of the opening of the product, which performs the function of a stand;
Fig. 4 shows a graph representing the drying function of the product as a function of the quantity of passages of the toothbrush head through the opening of the product.

## EXAMPLES OF EMBODIMENT OF THE INVENTION

### Example 1

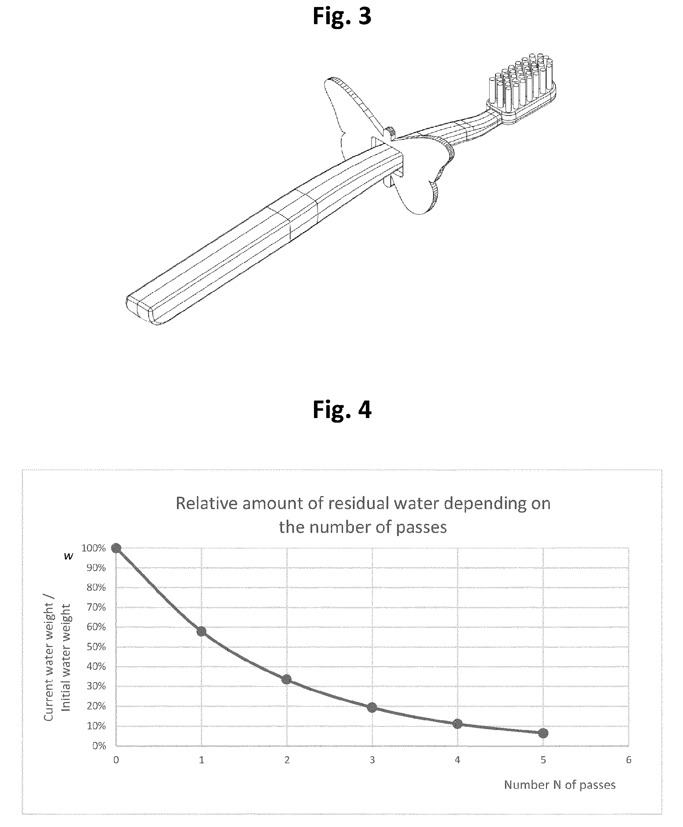

A product 2 having the function of a toothbrush dryer and toothbrush holder 1, comprising a pass-through opening 21 for inserting the toothbrush head 11, wherein the opening 21 also serves as a support for the toothbrush body, as seen, for example, in Fig. 3, wherein the width of the pass-through opening 21 corresponds to between 110% to 180% of the width of the fixed portion 111 of the toothbrush head, and the height of the pass-through opening 21 corresponds to at least half of the sum of the visible height of the filaments 112 and the height of the fixed portion 111 of the toothbrush head and is no greater than the sum of the height of the fixed portion 111 of the toothbrush head and the visible height of the filaments 112. The thickness of the edge of the opening 21 corresponds to at least 20 % of the height of the fixed part 111 of the toothbrush head and is at most 80 % of the height of the fixed part 111 of the toothbrush head.

### Example 2

The product 2 according to Example 1, wherein the height of the pass-through opening 21 corresponds to the sum of 55 to 65 % of the visible height of the filaments 112 and the height of the fixed part 111 of the brush head.

### Example 3

The product 2 according to Example 2, wherein the height of the pass-through opening 21 corresponds to the sum of 61 % of the visible height of the filaments 112 and the height of the fixed part 111 of the brush head.

### Example 4

The product 2 according to any one of Examples 1 to 3, wherein the basic shape of the opening 21 is identical to the shape of the brush head 11.

### Example 5

The product 2 according to any one of Examples 1 to 4, wherein the opening 21 is rectangular in shape.

### Example 6

The product 2 according to any one of Examples 1 to 5, which is formed from the same material as the toothbrush 1 body.

### Example 7

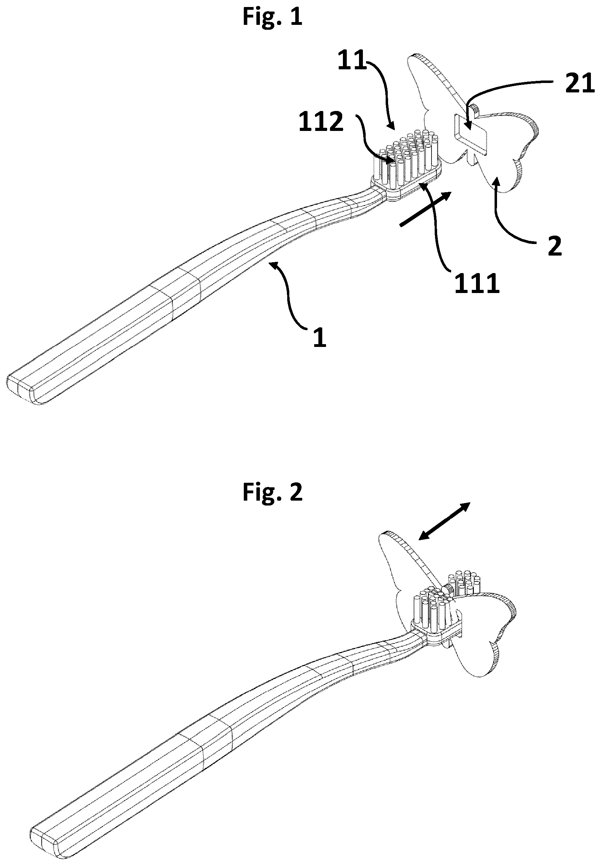

The outer shape of the product 2 according to any of Examples 1 to 5 in Figures 1, 2, and 3, here in the form of a butterfly, may be formed in any commercial form, but must include at least two support points in the lower support portion of the outer shape of the product 2.

### INDUSTRIAL UTILIZATION

The invention is industrially utilizable in the field of oral hygiene as a widely available and inexpensive accessory to reduce bacterial and fungal growth in toothbrushes.

### LIST OF REFERENCE MARKS

1       - toothbrush
11      - toothbrush head
111     - fixed part of the toothbrush head
112     - toothbrush filaments
2       - product
21      - pass-through opening

### Claims

1. A product (2) having the function of a toothbrush (1) dryer and toothbrush (1) holder, **characterized in that** it comprises a pass-through opening (21) for inserting the head (11) of the toothbrush, which also serves as a support for the body of the toothbrush,

wherein the width of the pass-through opening (21) corresponds to between 110 % to 180 % of the width of the fixed part (111) of the toothbrush head,

wherein the height of the pass-through opening (21) is at least half the sum of the visible height of the filaments (112) and the height of the fixed part (111) of the brush head and is not greater than the sum of the height of the fixed part (111) of the brush head and the visible height of the filaments (112),

wherein the thickness of the edge of the opening (21) corresponds to at least 20 % of the height of the fixed part (111) of the toothbrush head and is at most 80 % of the height of the fixed part (111) of the toothbrush head.

2. The product (2) according to claim 1, **characterized in that** the height of the pass-through opening (21) corresponds to the sum of 55 to 65 % of the visible height of the filaments (112) and the height of the fixed part (111) of the toothbrush head.

3. The product (2) according to claim 1, **characterized in that** the height of the pass-through opening (21) corresponds to the sum of 61 % of the visible height of the filaments (112) and the height of the fixed part (111) of the toothbrush head.

4. The product (2) according to any one of claims 1 to 3, **characterized in that** the shape of the opening (21) is identical to the shape of the toothbrush head (11).

5. The product (2) according to any one of claims 1 to 4, **characterized in that** the opening (21) is rectangular in shape.

6. The product (2) according to any one of claims 1 to 5, **characterized in that** it is formed of the same material as the toothbrush (1) body.

**Patentansprüche**

1. Ein Produkt (2) mit der Funktion eines Zahnbürstentrockners und Zahnbürstenhalters, **dadurch gekennzeichnet, dass** es eine Durchgangsöffnung (21) zum Einstecken des Kopfes (11) der Zahnbürste aufweist, die gleichzeitig als Halterung für den Körper der Zahnbürste dient,

wobei die Breite der Durchgangsöffnung (21) zwischen 110 % und 180 % der Breite des feststehenden Teils (111) des Zahnbürstenkopfes entspricht,

wobei die Höhe der Durchgangsöffnung (21) mindestens der Hälfte der Summe der sichtbaren Höhe der Borsten (112) und der Höhe des feststehenden Teils (111) des Bürstenkopfes entspricht und nicht größer ist als die Summe der Höhe des feststehenden Teils (111) des Bürstenkopfes und der sichtbaren Höhe der Borsten (112), wobei die Dicke des Randes der Öffnung (21) mindestens 20 % der Höhe des feststehenden Teils (111) des Zahnbürstenkopfes entspricht und höchstens 80 % der Höhe des feststehenden Teils (111) des Zahnbürstenkopfes beträgt.

2. Das Produkt (2) gemäß Anspruch 1, **dadurch gekennzeichnet, dass** die Höhe der Durchgangsöffnung (21) der Summe von 55 bis 65 % der sichtbaren Höhe der Borsten (112) und der Höhe des feststehenden Teils (111) des Zahnbürstenkopfes entspricht.

3. Das Produkt (2) gemäß Anspruch 1, **dadurch gekennzeichnet, dass** die Höhe der Durchgangsöffnung (21) der Summe von 61 % der sichtbaren Höhe der Borsten (112) und der Höhe des feststehenden Teils (111) des Zahnbürstenkopfes entspricht.

4. Das Produkt (2) gemäß einem der Ansprüche 1 bis 3, **dadurch gekennzeichnet, dass** die Form der Öffnung (21) mit der Form des Zahnbürstenkopfes (11) identisch ist.

5. Das Produkt (2) gemäß einem der Ansprüche 1 bis 4, **dadurch gekennzeichnet, dass** die Öffnung (21) rechteckig ist.

6. Das Produkt (2) gemäß einem der Ansprüche 1 bis 5, **dadurch gekennzeichnet, dass** es aus dem gleichen Material wie der Zahnbürstenkörper besteht.

**Revendications**

1. Le produit (2) à fonction de séchoir (1) et de support (1) de brosse à dents, **caractérisé en ce qu'il** comprend une ouverture de passage (21) pour l'insertion de la tête (11) de la brosse à dents, qui sert également de support au corps de la brosse à dents,

   dans lequel la largeur de l'ouverture de passage (21) correspond à 110 % à 180 % de la largeur de la partie fixe (111) de la tête de la brosse à dents,
   dans lequel la hauteur de l'ouverture de passage (21) est au moins égale à la moitié de la somme de la hauteur visible des filaments (112) et de la hauteur de la partie fixe (111) de la tête de brosse et n'est pas supérieure à la somme de la hauteur de la partie fixe (111) de la tête de brosse et de la hauteur visible des filaments (112),
   dans lequel l'épaisseur du bord de l'ouverture (21) correspond à au moins 20 % de la hauteur de la partie fixe (111) de la tête de brosse à dents et à au plus 80 % de la hauteur de la partie fixe (111) de la tête de brosse à dents.

2. Le produit (2) selon la revendication 1, **caractérisé en ce que** la hauteur de l'ouverture de passage (21) correspond à la somme de 55 à 65 % de la hauteur visible des filaments (112) et de la hauteur de la partie fixe (111) de la tête de brosse à dents.

3. Le produit (2) selon la revendication 1, **caractérisé en ce que** la hauteur de l'ouverture de passage (21) correspond à la somme de 61 % de la hauteur visible des filaments (112) et de la hauteur de la partie fixe (111) de la tête de brosse à dents.

4. Le produit (2) selon les revendications 1 3, **caractérisé en ce que** la forme de l'ouverture (21) est identique à la forme de la tête de la brosse à dents (11).

5. Le produit (2) selon les revendications 1 à 4, **caractérisé en ce que** l'ouverture (21) est de forme rectangulaire.

6. Le produit (2) selon les revendications 1 à 5, **caractérisé en ce qu'il** est formé du même matériau que le corps de la brosse à dents (1).

**Fig. 1**

**Fig. 2**

# Fig. 3

# Fig. 4

Relative amount of residual water depending on the number of passes

**EP 4 388 935 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3968950 A
- US 5875516 A
- US 6758446 B
- KR 200437777 Y1